# FASCICULE DE BREVET EUROPEEN

(11) **EP 1 173 831 B1**
(45) Date de publication et mention de la délivrance du brevet: **21.05.2003**
(21) Numéro de dépôt: 00915312.3
(22) Date de dépôt: 20.04.2000
(51) Int. Cl.: G07B 15/02, G07F 7/08

(54) **PROCEDE DE GESTION DE TITRES DE TRANSPORT ELECTRONIQUES ET INSTALLATION POUR SA MISE EN OEUVRE**
VERFAHREN ZUR VERWALTUNG VON ELEKTRONISCHEN FAHRKARTEN UND EINRICHTUNG ZU DESSEN DURCHFÜHRUNG
METHOD FOR MANAGING ELECTRONIC TRANSPORT TICKETS AND INSTALLATION THEREFOR

(30) Priorité: 29.04.1999 CH 78999; 12.10.1999 CH 186399
(43) Date de publication de la demande: 23.01.2002
(73) Titulaire: Cardintell Know How S.A., 2000 Neuchâtel (CH)
(72) Inventeur: FAVRE, Emmanuel, CH-2400 Le Locle (CH); TONDINI, Stéphane, CH-1454 L'Auberson (CH); KOBEL, Werner, CH-3007 Berne (CH); PIACENZA, Francis, F-78180 Montigny-le-Bretonneux (FR); LEBET, Jean-Philippe, CH-2206 Les Geneveys-sur-Coffrane (CH)
(74) Mandataire: Micheli & Cie
(86) Numéro de dépôt international: IB0000491
(87) Numéro de publication internationale: WO00067208

(56) Documents cités:
- EP-A- 0 465 456
- WO-A-92/08148
- WO-A-93/09621
- GB-A- 2 246 896
- GB-A- 2 267 626

## Description

La présente invention concerne un procédé de traitement de données entre un dispositif maître et une pluralité de dispositifs esclaves ainsi qu'une installation pour sa mise en oeuvre. Plus particulièrement, l'invention concerne un procédé de gestion automatique de titres de transport électroniques qui permet de valider et de contrôler les titres de transport électroniques portés par les usagers, sans que ces derniers n'aient à effectuer une quelconque opération.

De nombreuses applications comme le contrôle d'accès de personnes à des installations ou le comptage de produits, utilisent des dispositifs électroniques connus sous le nom de cartes à puces sans contact, de 'tags' ou de 'transponders'.
Ces dispositifs, qui peuvent être dépourvus de source d'énergie interne, comprennent généralement au moins un circuit d'interface couplé à une antenne et une mémoire programmable. Ils peuvent en outre comporter un microprocesseur et/ou d'autres circuits électroniques aptes à traiter et à transmettre les informations contenues dans leur mémoire. Ils sont portés par leur détenteur ou par l'objet à contrôler et servent, selon les cas, de clé d'accès à une installation, de mémoire à accès automatique permettant la restitution ou la modification de données préenregistrées ou de mémoire de données variables telles que des unités tarifaires pour des droits prépayés ou post payés.

Ces dispositifs esclaves sont utilisés avec un dispositif électronique maître (émetteur/lecteur) comprenant les composants électroniques nécessaires à la génération, à la mise en forme et à l'émission d'une porteuse modulée portant un signal codé.

Lorsqu'un dispositif esclave est situé dans le champ alternatif radiant émis par un dispositif maître, son antenne peut extraire du champ alternatif (porteuse) l'énergie nécessaire à l'alimentation temporaire d'une partie au moins de ses circuits électroniques. Ces circuits établissent subséquemment un dialogue avec le dispositif maître selon un protocole préétabli.

Lorsque les dispositifs esclaves sont dépourvus de source d'énergie propre, on est confronté à certaines restrictions inhérentes à cette technologie. En particulier, la distance utile de travail d'un dispositif esclave est de l'ordre d'un mètre, la fiabilité est fortement dépendante de l'environnement externe et de l'orientation respective des antennes. En effet le taux de détection ou de transactions valides diminue fortement en présence d'interférences, comme des perturbations électromagnétiques par exemple. En outre, cette technologie implique de 'canaliser' les usagers ou les marchandises à contrôler à travers un portique afin de s'assurer que la contrainte de distance est respectée.

Dans le cas de dispositifs esclaves munis d'une source d'énergie propre, il est possible de travailler à des fréquences beaucoup plus élevées (dans une plage comprise entre quelques Méga Hertz et 5 Giga Hertz) et donc d'augmenter considérablement la distance de travail entre un lecteur (dispositif maître) et une pluralité de dispositifs esclaves. Les systèmes connus permettent de travailler à une distance de l'ordre de quelques dizaines de mètres. Il n'est toutefois pas possible avec cette technologie de faire varier facilement la distance à laquelle on peut établir une liaison avec un dispositif esclave. De ce fait, cette technologie n'a pas été utilisée pour le contrôle de passagers empruntant des transports publics de masse comme le chemin de fer ou les transports publics urbains par exemple.

On connaît de la demande PCT publiée sous le numéro WO 92 08148 une installation de gestion dispositifs esclaves ou tags électroniques. Cette installation comporte au moins une antenne haute fréquence couvrant une zone déterminée ainsi qu'une antenne basse fréquence agencée sur un portique donnant accès à la zone couverte par les antennes haute fréquence. L'antenne basse fréquence émet un signal d'interrogation vers les tags qui, lorsqu'ils traversent le portique, se mettent à émettre périodiquement un signal en haute fréquence. Ce signal, une fois reçu par les antennes haute fréquence permet de localiser les tags dans l'espace couvert.

Le demande européenne publiée EP 0 465 456 A1 décrit un système de tarification pour les transports en commun dans lequel un lecteur/émetteur est activé lorsque les portes du véhicule sont ouvertes ainsi qu'un procédé de traitement de données entre un dispositif maître embarqué dans un véhicule et une pluralité de dispositifs esclaves portés par les usagers. Ce procédé prévoit une étape de détection de l'état de marche du véhicule et ne permet l'échange d'information entre le lecteur et les tags franchissant la porte d'accès que lorsque le véhicule est à l'arrêt et que les portes sont ouvertes. Les informations transmises permettent d'identifier les dispositifs esclaves et d'effectuer une tarification en fonction de la distance parcourue.

Si l'on utilise une technologie à haute fréquence comme décrite précédemment, on s'expose à des difficultés de traitement des données dans la mesure où l'on ne pourra pas facilement discriminer les porteurs d'un titre de transport électronique qui entrent ou sortent du véhicule de ceux qui sont simplement en attente sur le quai d'embarquement.

Par ailleurs, les dispositifs esclaves haute fréquence posent également des problèmes au niveau de leur consommation d'énergie lorsqu'ils sont actifs en permanence.

Le but de la présente invention est de remédier aux inconvénients mentionnés ci-dessus et de permettre, grâce une combinaison des technologies haute et basse fréquence, l'établissement d'une transmission de données cohérente entre un dispositif maître ou lecteur et une pluralité de dispositifs esclaves portés par des usagers. Grâce à ce procédé et à l'installation permettant sa mise en oeuvre, la validité d'un titre de transport électronique peut être vérifiée durant le trajet. Toute autre transaction entre un ou plusieurs dispositifs esclaves et le lecteur/émetteur est également envisageable. Un autre but de l'invention est de réduire la consommation d'énergie des dispositifs esclaves en optimisant les périodes de temps durant lesquelles ces derniers doivent être actifs.

Ce but est atteint grâce à un procédé de traitement des données entre un dispositif maître et une pluralité de dispositifs esclaves ainsi qu'une installation de traitement de données qui se distinguent par les caractéristiques énumérées aux revendications 1 et 6.

L'avantage principal d'un tel procédé est de pouvoir utiliser une technologie haute fréquence éprouvée, en combinaison avec une technologie basse fréquence qui améliore la fiabilité du système en effectuant un pré-traitement des informations et de réduire la consommation énergétique des dispositifs esclaves.

D'autres avantages ressortent des caractéristiques énumérées dans les revendications dépendantes, la description qui suit, et des dessins qui représentent schématiquement et à titre d'exemple une installation de traitement de données selon l'invention.

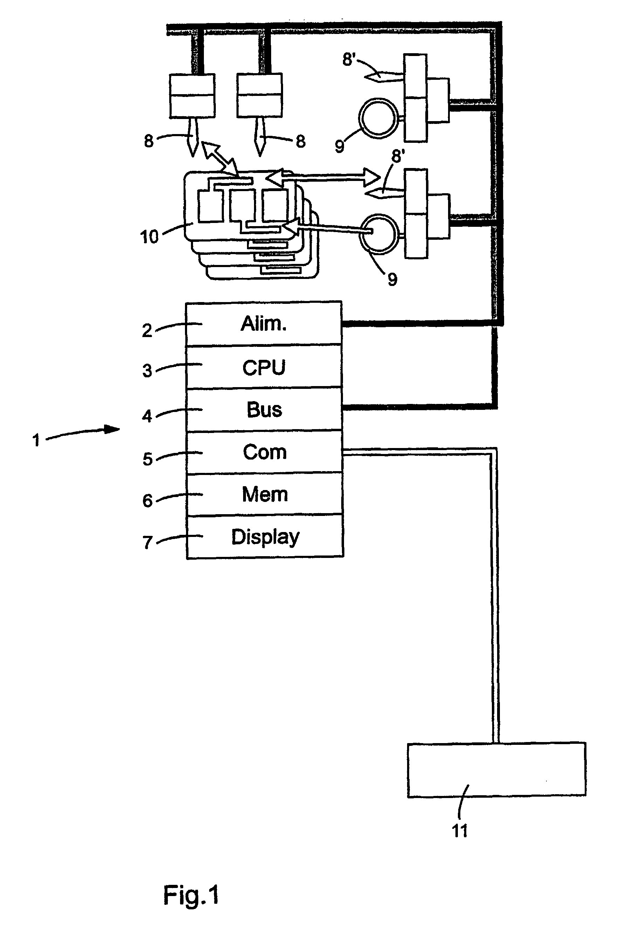

La figure 1 est une vue schématique des composants nécessaires à la mise en oeuvre du procédé objet de l'invention.

Le procédé et l'installation de traitement de données objets de la présente invention vont maintenant être décrits en référence à un exemple dans le domaine du transport ferroviaire, qui peut être extrapolé à d'autres domaines sans sortir du cadre de l'invention telle que revendiquée.

Prenons à titre d'exemple un titre de transport électronique, réalisé sous forme d'un dispositif muni d'une source d'énergie et comprenant les circuits électroniques nécessaires au stockage et à l'échange bidirectionnel de données avec un dispositif maître ou lecteur. Le dispositif maître ou lecteur/émetteur comporte les composants électroniques connus nécessaires à la génération, à la mise en forme et à l'émission d'une porteuse modulée portant un signal codé ainsi que des moyens de stockage, de traitement et de transmission des données, ceci aussi bien en haute fréquence qu'en basse fréquence. Lorsque le dispositif maître est activé, un échange de données est possible entre le dispositif maître et un ou plusieurs dispositifs esclaves se trouvant dans le champ radiant émis par le lecteur.

Le problème de la gestion des accès concurrents entre le lecteur et une pluralité de dispositifs esclaves situés ou entrant dans le champ radiant émis par le lecteur fait l'objet de la demande de brevet suisse CH 3522/95 et ne sera pas décrit dans la présente demande. Grâce au procédé décrit dans la demande précitée, il est possible de garantir une transmission de données bidirectionnelle cohérente entre un lecteur et une pluralité de dispositifs esclaves situés ou entrant dans le champ d'action du lecteur.

La nature de la transaction à effectuer entre le lecteur et les dispositifs esclaves n'est pas significative. Il peut s'agir par exemple d'une transaction simple telle que le comptage du nombre de passagers d'un wagon dans un but statistique. D'autres transactions plus complexes nécessitant une pluralité de dialogues entre le lecteur et le dispositif esclave et impliquant des opérations de lecture et d'écriture dans la mémoire du dispositif esclave sont également envisageables. Dans le cas d'un titre de transport électronique à pré-paiement, il est possible de décrémenter un certain nombre d'unités tarifaires préalablement mémorisées dans le dispositif esclave en fonction du trajet effectué.

Dans la description qui suit, les dispositifs esclaves seront dénommés tags et le dispositif maître sera référencé sous l'appellation lecteur.

Le problème réside dans le fait de pouvoir discriminer les tags avec lesquels il est nécessaire d'établir une transaction. En utilisant une technologie à haute fréquence avec des tags munis d'une source d'énergie et donc la possibilité d'établir un dialogue entre le lecteur et le ou les tags à une distance de l'ordre de 20 mètres, on ne peut effectuer de transactions fiables lorsque le véhicule est à l'arrêt dans la zone d'embarquement. En effet, l'activation du lecteur à cet instant peut conduire à activer et à dialoguer avec des tags situés à proximité du véhicule sans que l'intention de leur propriétaire ne soit d'utiliser effectivement le moyen de transport.

Pour résoudre ce problème, on impose comme contrainte au système qu'une transaction initiée par le dispositif maître ne peut avoir lieu que lorsque le véhicule est en mouvement et dans une zone choisie arbitrairement, mais de manière à minimiser les effets perturbateurs provoqués par des tags involontairement atteints par le champ radio fréquence. On exclut de ce fait le traitement de tags situés à proximité du véhicule et qui n'ont pas l'intention de l'utiliser.

Le procédé de traitement des données consiste donc à n'établir une transmission de données entre le dispositif maître et le ou les dispositifs esclaves qu'au moment où le véhicule est en mouvement, en dehors de zones d'embarquement. Pour s'assurer que l'on ne se trouve pas dans une zone dans laquelle peuvent se trouver des dispositifs esclaves résiduels on peut asservir l'initialisation du dispositif maître à la vitesse du véhicule en décidant par exemple qu'en dessous de telle vitesse nominale, le dispositif maître reste inactif.

Le procédé consiste donc dans la succession d'étapes suivantes. On détermine tout d'abord l'état de marche ou d'arrêt du véhicule. Si le véhicule est à l'arrêt, on interrompt immédiatement les opérations de transmission de données entre le lecteur et les dispositifs esclaves. Dans le cas où le véhicule est en mouvement, c'est-à-dire en dehors des zones d'embarquement, on active le dispositif maître ou lecteur et les opérations de transmission de données entre le lecteur et les dispositifs esclaves peuvent s'établir. Une fois les transactions effectuées, les données relatives à ces transactions sont sauvegardées dans une mémoire de masse qui peut faire partie intégrante du dispositif maître ou être reliée à ce dernier par tous moyens de transmission comme une ligne téléphonique ou un réseau local.

Si besoin est, on peut introduire une redondance suivant les applications ou la nature des transactions qui doivent être faites. A cet effet on peut prévoir plusieurs cycles d'activation du lecteur durant la marche du véhicule à intervalles programmés entre deux gares par exemple. Les informations relatives à un cycle d'activation du lecteur peuvent ensuite être comparées entre elles et provoquer le déclenchement d'un nouveau cycle d'activation du lecteur en cas d'inadéquation entre les différents jeux de sauvegarde ainsi obtenus.

Le système permettant la mise en oeuvre du procédé décrit ci-dessus comporte un dispositif maître ou lecteur installé dans le véhicule ainsi que des moyens permettant de déterminer l'état statique ou en mouvement du véhicule. Le dispositif maître comprend les circuits électroniques nécessaires à la génération d'une porteuse modulée ainsi qu'à la transmission bidirectionnelle de données. Il peut selon les cas également comporter une unité de traitement des données et/ou de sauvetage de ces données. Les moyens permettant de déterminer l'état de marche/arrêt du véhicule sont connus en soi et ne seront pas décrits en détail dans la présente demande. On citera à titre d'exemple non limitatif, des capteurs de vitesse permettant de déterminer la vitesse du véhicule.

Dans une variante, ces moyens peuvent être constitués, lorsque l'horaire du trajet est prédéterminé, d'un temporisateur qui actionne le lecteur à certains instants précis lorsque le véhicule est en mouvement. Dans une autre forme d'exécution, ces moyens peuvent être couplés à la commande de marche du véhicule de manière à ce qu'ils émettent une impulsion de commande lorsque le véhicule démarre. D'autres moyens permettant de s'assurer que le véhicule est en mouvement et en dehors de zone d'embarquement sont également envisageables, comme par exemple un compteur de la distance parcourue depuis le dernier arrêt du véhicule. Il est également possible de prévoir des dispositifs fixes ou balises le long du trajet à parcourir, dans des zones propices, c'est-à-dire dans des zones dans lesquelles il n'y a pas de porteurs potentiels de dispositifs esclaves et qui sont ne sont pas soumises à des perturbations électromagnétiques. Ces balises détectent le passage du véhicule et transmettent une impulsion qui active le dispositif maître.

Le procédé décrit ci-dessus est parfaitement adapté lorsqu'il s'agit d'effectuer des transactions simples entre le lecteur embarqué dans le véhicule et les tags portés par les utilisateurs. Par exemple lorsque l'on désire établir des statistiques sur le nombre de voyageurs utilisant le moyen de transport. En revanche, lorsque l'on souhaite vérifier la présence et la validité d'un tag servant de titre de transport, il est souhaitable d'effectuer un pré-traitement des données avant de consolider les données lors du trajet. A cet effet, les tags actifs proposés sont pourvus à la fois des composants nécessaires pour établir un dialogue avec le lecteur selon une technologie haute fréquence et des composants nécessaires pour établir un dialogue avec un lecteur utilisant une technologie basse fréquence.

Pour faciliter la description du procédé objet de l'invention, on se réfèrera à la figure 1 qui illustre schématiquement les composants permettant sa mise en oeuvre.

La figure 1 illustre les équipements installés dans un véhicule comme un wagon de chemin de fer par exemple. Un lecteur 1 embarqué dans le wagon comprend les composants traditionnels d'un tel dispositif. En particulier un module d'alimentation 2, une unité de calcul ou processeur 3, un bus de communication 4 reliant les antennes haute fréquence 8 équipant l'habitacle du wagon et les antennes basse fréquence 9 installées sur les portes du véhicule. Il comporte encore un module de communication 5 permettant le transfert de données bidirectionnellement vers un ordinateur central 11 qui peut être embarqué dans le véhicule ou non. Enfin le lecteur est pourvu d'une mémoire 6 qui sera de préférence non volatile et d'une interface utilisateur 7 permettant l'affichage et la saisie de données.

Le module d'alimentation 2 fournit l'énergie nécessaire au fonctionnement des antennes hautes fréquence 8,8' installées dans le wagon ainsi qu'aux antennes basse fréquence 9 installées à proximité immédiate des portes du véhicule. Les différentes antennes haute et basse fréquence 8,8',9 sont reliées au lecteur par l'intermédiaire d'un canal de communication qui utilisera de préférence une technologie à fibre optique pour se mettre à l'abri des perturbations électromagnétiques. On a représenté, à titre d'exemple, deux antennes haute fréquence 8 qui sont installées de préférence dans le plafond du wagon. Selon la taille de ce dernier on pourra en prévoir un nombre plus important. Les portes du wagon sont équipées d'une double antenne, l'une basse fréquence 9 et l'autre haute fréquence 8'.

Les tags 10 constituant les titres de transport à traiter comprennent également les moyens nécessaires pour effectuer un traitement d'informations adéquat. Ils comportent au moins les composants suivants: Une source d'énergie comme une pile ou un accumulateur, un processeur, une mémoire non volatile ainsi que les composants nécessaires à la transmission bi-directionnelle de données, en particulier une interface de communication reliée à une antenne haute fréquence et à une antenne basse fréquence.

Les tags 10 ont plusieurs modes de fonctionnement. Un premier état de veille dans lequel le tag est à l'écoute d'un champ radiant basse fréquence. Ce mode de veille ne consomme que peu d'énergie. Dans un second mode, le tag est actif et peut émettre et recevoir des données transmises par un lecteur haute fréquence. Il est souhaitable que ce mode de travail ne soit utilisé que lorsque cela est nécessaire dans le but d'augmenter la durée de fonctionnement de ces dispositifs.

Le passage d'un mode à l'autre est réalisé par l'envoi d'une trame de commande spécifique par le lecteur, aussi bien en basse fréquence qu'en haute fréquence.

Pour réaliser une gestion performante des titres de transport de façon automatique, il est nécessaire de connaître avec certitude quels sont les tags utilisant réellement le véhicule ainsi que des informations relatives au trajet qu'ils vont effectuer. Ceci exclut d'établir un dialogue haute fréquence lorsque le véhicule est à l'arrêt dans une zone d'embarquement. En effet, cette émission haute fréquence aurait pour conséquence d'activer des tags se trouvant sur le quai d'embarquement ou à proximité du véhicule sans pour autant être sûr qu'ils vont emprunter le moyen de transport. Si l'on se contente de vérifier la présence de tags dans le véhicule, seulement lorsque ce dernier est en mouvement et dans des zones propices, c'est-à-dire dans des zones ou l'on ne risque pas d'établir un dialogue avec des tags qui ne sont pas effectivement dans le véhicule, on est confronté à des problèmes de fiabilité. Ceci est spécialement vrai lorsque le trajet entre deux stations est court comme dans le cas d'un métro par exemple. Le temps à disposition pour effectuer les transactions nécessaires entre le lecteur et les tags présents est en effet trop court pour garantir la fiabilité des transactions.

Pour résoudre ce problème, le procédé objet de l'invention effectue un marquage préalable sélectif des tags entrant dans le véhicule.

On part de l'hypothèse suivante : le véhicule est à l'arrêt dans une zone d'embarquement, l'émission haute fréquence du lecteur étant désactivée.

Au moment de l'ouverture des portes du véhicule, le lecteur active les antennes basse fréquence 9 situées au niveau des portes d'accès du véhicule. Le champ radiant émis par l'antenne basse fréquence du lecteur est localisé aux abords immédiats de la porte d'accès concernée et sa portée n'excède pas un mètre environ. La partie haute fréquence du lecteur 1 est en mode réception uniquement, ce qui ne perturbe pas les tags situés sur le quai d'embarquement.

Lorsqu'un tag passe la porte, et de ce fait entre dans le champ du lecteur basse fréquence, son antenne basse fréquence détecte le signal et active le tag. Le lecteur émet en continu, en basse fréquence, une trame de données porteuse de différentes informations. Le tag sauvegarde ces informations dans une mémoire interne au moment de son passage dans le champ du lecteur basse fréquence. La trame émise par le lecteur basse fréquence comprend différentes informations. En premier lieu, une information temporelle correspondant à l'instant de passage du tag à travers la porte. De préférence, on choisira une résolution élevée, de l'ordre du millième de seconde, pour les informations temporelles, de manière à ce que même dans le cas où plusieurs tags passent par la porte pratiquement au même instant, chaque tag sauvegarde une donnée temporelle différente. En cas de simultanéité vraie de passage, seul un nombre restreint de tags entrant auront la même information temporelle. La trame émise par le lecteur en basse fréquence comporte encore des informations relatives au lieu géographique dans lequel se trouve le véhicule à l'arrêt. Dans le cas d'un train ou d'un métro, ces informations seront constituées d'un identifiant correspondant au nom de la gare ou de la station dans laquelle se trouve le véhicule. Enfin une troisième information relative à la porte d'accès du véhicule, dans le cas où ce dernier en comporte plusieurs, est sauvegardée par le tag. Si la nature des transactions à effectuer l'exige, d'autres informations peuvent être transmises et mémorisées dans les tags lors de leur accès au véhicule.

Dès qu'un tag entrant a sauvegardé les informations transmises par l'antenne basse fréquence 9 du lecteur 1, il active ses circuits de réception haute fréquence. Si le tag ne détermine pas d'activité dans cette zone de fréquence, par exemple en monitorant la sortie de son démodulateur, il transmet immédiatement en haute fréquence une trame d'identification qui comprend les informations préalablement sauvegardées, lors de son marquage basse fréquence, ainsi que son numéro de série unique. Si le tag détermine que des transmissions sont en cours, il attend durant une période aléatoire, puis vérifie à nouveau s'il peut émettre sa trame d'identification.

L'antenne haute fréquence 8' située au niveau de la porte du véhicule détecte cette trame d'identification et la transmet au lecteur 1 qui sauvegarde les informations reçues dans sa mémoire non volatile 6.

Lorsque plusieurs tags entrent simultanément ou quasi simultanément dans le wagon, ils risquent d'émettre leur trame d'identification haute fréquence en même temps et ainsi provoquer des collisions. Ce problème est résolu par la mise en oeuvre d'algorithmes connus permettant soit de gérer des accès concurrents entre un lecteur et une pluralité de tags, soit de détecter des collisions et de prendre les mesures nécessaires pour garantir une transmission de données cohérentes.

Après avoir émis sa trame d'identification, le tag entrant cesse toute émission et retourne dans un état de veille, consommant peu d'énergie.

Grâce à l'utilisation des deux technologies, haute et basse fréquence, on réalise de substantielles économies d'énergie au niveau du tag, ce dernier étant inactif, et donc ne consommant pas d'énergie, jusqu'à son passage à proximité du champ radiant émis par l'antenne basse fréquence 9 du lecteur 1. D'autre part, les informations sauvegardées dans le tag 10 lors de son entrée dans le véhicule, en combinaison avec son numéro d'identification unique facilitent grandement la gestion subséquente comme expliqué ci-dessous.

Le véhicule ferme ensuite ses portes et démarre. A cet instant, le lecteur basse fréquence est désactivé puisque aucun autre tag ne peut monter dans le véhicule. On peut prévoir à cet effet un asservissement du lecteur 1 à la commande d'ouverture/fermeture des portes par exemple. Lorsque le véhicule a atteint une vitesse suffisante ou que l'ordinateur central 11 lui indique qu'il se trouve dans une zone propice pour effectuer un transfert d'informations à haute fréquence, le lecteur haute fréquence procède à une vérification de tous les tags présents dans le véhicule. Grâce aux informations préalablement enregistrées dans le tag et à celles figurant déjà dans la mémoire du lecteur, le lecteur haute fréquence peut adresser des trames et procéder à des échanges d'informations avec tous les tags présents ou seulement avec une partie d'entre eux selon certains critères. Le lecteur peut en effet décider de ne dialoguer qu'avec les tags entrés à une station déterminée ou dans une tranche horaire définie. Les opérations effectuées en haute fréquence sont alors considérablement simplifiées, puisque le lecteur a déjà connaissance des tags entrés dans le véhicule lorsque ces derniers se sont inscrits. Les transactions haute fréquence sont ainsi réduites en durée et en complexité.

Il suffit en effet d'interroger les tags présents dans le véhicule et de comparer les données transmises par les tags avec celles sauvegardées lors de l'entrée des tags dans le véhicule. En cas d'adéquation, le lecteur haute fréquence peut envoyer une commande d'inhibition aux tags trouvés afin que ces derniers se mettent en mode de veille et consomment moins d'énergie.

Chaque tag possédant un numéro de série unique, le lecteur haute fréquence peut également adresser une commande ou initier une transaction avec un tag spécifique ou un groupe de tags déterminés. Grâce au marquage des tags au moment de leur entrée dans le véhicule, on peut également facilement gérer le cas d'un tag qui entre, puis sort du véhicule, avant la fermeture des portes. En effet, ce tag est considéré comme utilisant le véhicule puisqu'il s'est inscrit lors de son passage devant l'antenne basse fréquence 9 située au niveau de la porte. La validation de la présence de ce tag ne s'effectue qu'à posteriori lors des échanges haute fréquence, le véhicule étant en marche. Le lecteur peut alors facilement détecter que le tag n'est plus présent dans le véhicule, puisque ce dernier ne répondra pas à une trame de commande comportant son identifiant unique.

Toute la gestion des transactions relatives à la validation ou à la facturation d'un élément de trajet d'un tag empruntant le véhicule est simplifiée par l'inscription préalable du tag.

Les opérations d'interrogation et de consolidation des données en haute fréquence peuvent être effectuées plusieurs fois lorsque le véhicule se déplace, augmentant ainsi la fiabilité des données traitées.

En ce qui concerne les plages de fréquences utilisées par le lecteur lorsqu'il émet en haute fréquence, on choisira de préférence une plage de fréquences qui ne soit pas trop absorbée par l'eau, qui reste confinée à une dizaine de mètres et qui tolère, dans l'espace du wagon, les phénomènes de réflexion. Une fréquence de 433 MHz est particulièrement bien adaptée à ce genre d'application.

## Revendications

1. Procédé de traitement de données entre un dispositif maître (1) embarqué dans un véhicule et une pluralité de dispositifs esclaves (10) portés par les passagers du véhicule, **caractérisé en ce qu'**il comporte les étapes suivantes: détection de l'état de marche ou d'arrêt du véhicule,
activation du dispositif maître (1) lorsque la détection de l'état de marche indique que le véhicule est en mouvement,
transfert de données bidirectionnellement entre le dispositif maître (1) et au moins un dispositif esclave (10) situé dans le champ de travail du lecteur (1), afin d'effectuer une transaction prédéterminée,
sauvegarde dans le dispositif maître (1) ou dans une mémoire (6,11) qui lui est reliée des données résultantes des transactions accomplies,
désactivation du dispositif maître.

2. Procédé selon la revendication 1 **caractérisé en ce qu'**il comprend la répétition des étapes permettant d'effectuer la transaction voulue et la sauvegarde des informations en résultant, puis la comparaison des données sauvegardées avec les données précédemment sauvegardées.

3. Procédé de gestion de titres de transport électroniques (10) portés par des utilisateurs d'un véhicule, **caractérisé par le fait que** l'on inscrit dans chaque tag (10) entrant dans le véhicule une série d'informations, à l'aide d'un lecteur (9,9') basse fréquence situé aux abords immédiats de la porte d'accès du véhicule, puis que chaque tag (10) ainsi marqué émet en haute fréquence une trame d'identification comprenant un identifiant propre au tag (10) et les informations préalablement inscrites dans le tag (10); **par le fait que** les informations transmises par les tags (10) dans leurs trames d'identification sont sauvegardées dans la mémoire (6) d'un lecteur (1) embarqué dans le véhicule et **par le fait que** ces informations sont ensuite comparées avec les informations obtenues lors d'échanges de données en haute fréquence entre le lecteur (1) et une pluralité de tags (10) présents dans le véhicule, ces échanges de données étant réalisés lorsque le véhicule est en mouvement.

4. Procédé selon la revendication 3, **caractérisé par le fait que** les informations inscrites dans les tags (10) entrant sont constituées d'une information temporelle correspondant à l'instant auquel le tag (10) entre dans le champ du lecteur (1) et par des informations géographiques permettant d'identifier la porte d'accès du véhicule ainsi que la gare ou station dans laquelle se trouve le tag (10) au moment de la transaction.

5. Procédé selon l'une des revendications 3 ou 4, **caractérisé par le fait que** lors des dialogues haute fréquence durant la marche du véhicule, le lecteur (1) adresse des commandes sélectives à un ou plusieurs tags (10) préalablement inscrits.

6. Installation de gestion de titres de transport électroniques pour la mise en oeuvre du procédé selon l'une des revendications 1 à 5 comportant un lecteur/émetteur (1) embarqué dans un véhicule, ce lecteur (1) comprenant les composants nécessaires (2,3,4,5,6,7) à la transmission bi-directionnelle de données en haute fréquence et en basse fréquence avec une pluralité de tags (10), au moins une antenne basse fréquence (9,9") située au niveau des voies d'accès du véhicule et au moins une antenne haute fréquence (8,8') dont le champ d'action couvre l'espace intérieur du véhicule, **caractérisée par le fait qu'elle** comporte des moyens de détection de l'état de marche/arrêt du véhicule qui activent la ou les antennes haute fréquence (8,8') uniquement lorsque le véhicule est en mouvement.

7. Installation selon la revendication 6, **caractérisée par le fait que** chaque porte d'accès au véhicule est équipée d'une antenne basse fréquence (9,9') et d'une antenne haute fréquence (8,8') reliées au lecteur (1) embarqué dans le véhicule.

8. Installation selon l'une des revendications 6 ou 7, **caractérisée par le fait que** l'activation de l'antenne basse fréquence (9,9') est asservie à la commande d'ouverture des portes du véhicule.

## Claims

1. A method for processing data between a master device (1) embarked onboard a vehicle and a plurality of slave devices (10), carried by the passengers of the vehicle, **characterised in that** it includes the following steps :
detection of the status of the vehicle, whether it is in motion or stopped, activation of the master device (1) when the detection of the status of the vehicle indicates that the vehicle is in motion,
bi-directional transfer of data between the master device (1) and, at least, one slave device (10) situated in the field of operation of the reader (1), in order to carry out a predetermined transaction,
saving in the master device (1) or in a memory (6, 11), which is connected thereto, of the data resulting from the transactions carried out,
deactivation of the master device.

2. A method according to claim 1, **characterised in that** it includes the repeating of the steps which make it possible to carry out the desired transaction and the saving of the resulting informations, followed by the comparison of the data saved with the previously saved data.

3. A method for processing electronic travel tickets (10) carried by the users of a vehicle, **characterised in that**, into each tag (10) entering the vehicle, a series of informations are written, by means of a low frequency reader (9, 9') located in the immediate vicinity of the access door to the vehicle, then each tag (10) thus marked emits, at a high frequency, an identification frame including an identifier specific of the tag (10) and the informations previously written into the tag (10); **in that** the informations transmitted by the tags (10) in their identification frames are saved in the memory (6) of a reader (1) embarked onboard the vehicle, and **in that** these informations are subsequently compared with the informations obtained during the exchange of data at high frequency between the reader (1) and a plurality of tags (10) present in the vehicle, these exchanges of data being carried out when the vehicle is in motion.

4. A method according to claim 3, **characterised in that** the informations written in the entering tags (10) are comprised of a time information corresponding to the point of time when the tag (10) enters the field of the reader (1) and location informations enabling the identification of the access door to the vehicle, as well as the bus or railway station in which is located the tag (10) at the time of the transaction.

5. A method according to one of claims 3 or 4, **characterised in that** during the high frequency dialogues when the vehicle is in motion, the reader (1) addresses selective commands to one or several previously written tags (10).

6. An installation for processing electronic travel tickets, used for implementing the method according to one of claims 1 to 5, including a reader / emitter (1) embarked onboard a vehicle, this reader (1) including the components (2, 3, 4, 5, 6, 7) necessary for the bi-directional transmission of data at a high frequency and at a low frequency with a plurality of tags (10), at least one low frequency antenna (9, 9") situated in the area of the access pathways to the vehicle and at least one high frequency antenna (8, 8') of which the field of action covers the inner space of the vehicle, **characterised in that** it includes means for detecting the status of the vehicle (stopped / in motion), which activate the high frequency antenna or antennae (8, 8') only when the vehicle is in motion.

7. An installation according to claim 6, **characterised in that** each access door to the vehicle is equipped with a low frequency antenna (9, 9') and with a high frequency antenna (8, 8') connected to the reader (1) embarked onboard the vehicle.

8. An installation according to one of claims 6 or 7, **characterised in that** the activation of the low frequency antenna (9, 9') is automatically controlled by the actuator means for opening the doors of the vehicle.

## Patentansprüche

1. Verfahren der Datenverarbeitung zwischen einer in einem Fahrzeug untergebrachten Master-Vorrichtung (1) und mehreren Slave-Vorrichtungen (10), die von den Fahrzeugpassagieren mitgeführt werden, **dadurch gekennzeichnet, dass** es die folgenden Schritte umfasst:
Erfassung des Fahrzeugzustands: in Fahrt oder im Stillstand,
Aktivierung der Master-Vorrichtung (1), wenn der wahrgenommene Fahrtzustand anzeigt, dass sich das Fahrzeug in Bewegung befindet,
Zweiweg-Datenübertragung zwischen der Master-Vorrichtung (1) und zumindest einer Slave-Vorrichtung (10), die sich im Arbeitsfeld des Lesers (1) befindet, um eine vorbestimmte Transaktion auszuführen,
Speicherung der aus den erfolgten Transaktionen gewonnenen Daten in der Master-Vorrichtung (1) oder in einem mit ihr verbundenen Speicher (6, 11),
Desaktivierung der Master-Vorrichtung.

2. Verfahren gemäss Anspruch 1, **dadurch gekennzeichnet, dass** es die Wiederholung der Schritte umfasst, die es gestatten, die gewollte Transaktion durchzuführen und die daraus gewonnenen Daten zu speichern, dann die gespeicherten Daten mit früher gespeicherten Daten zu vergleichen.

3. Verfahren der Verwaltung von elektronischen Fahrkarten (10), die von Benutzern eines Fahrzeuges mitgeführt werden, **dadurch gekennzeichnet, dass** mit Hilfe eines Niederfrequenzlesers (9, 9'), der sich in unmittelbarer Nähe des Fahrzeugeingangs befindet, eine Reihe von Daten in jedes in das Fahrzeug eintretende Tag (10) geschrieben werden, dass sodann jedes so gekennzeichnete Tag (10) bei hoher Frequenz einen Kennungszug aussendet, der die dem Tag (10) eigene Kennung sowie die im Voraus in das Tag (10) geschriebenen Daten enthält; dadurch, dass die durch die Tags (10) in ihren Kennungszügen übermittelten Daten im Speicher (6) eines im das Fahrzeug untergebrachten Lesers (1) gespeichert werden; und dadurch, dass diese Daten in der Folge mit den Daten verglichen werden, die während des Datenaustauschs bei hoher Frequenz zwischen dem Leser (1) und mehreren im Fahrzeug anwesenden Tags (10) erhalten wurden, wobei dieser Datenaustausch erfolgt, während sich das Fahrzeug in Bewegung befindet.

4. Verfahren gemäss Anspruch 3, **dadurch gekennzeichnet, dass** die in die eintretenden Tags (10) geschriebenen Daten aus einer zeitweiligen Information, die dem Augenblick entspricht, an dem das Tag (10) in das Feld des Lesers (1) eintrat, und aus geografischen Informationen bestehen, die es gestatten, den Fahrzeugeingang sowie den Bahnhof oder die Station, in der sich das Tag (10) zum Zeitpunkt der Transaktion befand, zu identifizieren.

5. Verfahren gemäss einem der Ansprüche 3 oder 4, **dadurch gekennzeichnet, dass** während der Hochfrequenzdialoge bei in Fahrt befindlichem Fahrzeug der Leser (1) ausgewählte Befehle an eines oder mehrere, im Voraus beschriebene Tags (10) adressiert.

6. Anlage für die Verwaltung von elektronischen Fahrkarten für die Realisierung des Verfahrens gemäss einem der Ansprüche 1 bis 5 mit einem in einem Fahrzeug untergebrachten Leser/Sender (1), wobei dieser Leser (1) die Bauteile (2, 3, 4, 5, 6, 7) enthält, die für die Zweiweg-Übermittlung von Daten bei hoher Frequenz und bei niedriger Frequenz mit mehreren Tags (10) erforderlich sind, mit zumindest einer Niederfrequenzantenne (9, 9"), die sich bei den Zugangswegen zum Fahrzeug befindet, sowie zumindest einer Hochfrequenzantenne (8, 8'), deren Wirkungsfeld das Fahrzeuginnere erfasst, **dadurch gekennzeichnet, dass** sie Mittel für eine Erfassung des Fahrzeugzustandes, in Fahrt oder im Stillstand, umfasst, die die Hochfrequenzantenne(n) (8, 8') nur aktivieren, wenn sich das Fahrzeug in Fahrt befindet.

7. Anlage gemäss Anspruch 6, **dadurch gekennzeichnet, dass** jede Zugangstür des Fahrzeugs mit einer Niederfrequenzantenne (9, 9') und einer Hochfrequenzantenne (8, 8') ausgerüstet ist, die mit dem im Fahrzeug untergebrachten Leser (1) verbunden sind.

8. Anlage gemäss einem der Ansprüche 6 oder 7, **dadurch gekennzeichnet, dass** die Aktivierung der Niederfrequenzantenne (9, 9') dem Befehl zur Öffnung der Fahrzeugtüren unterworfen ist.
